# EUROPÄISCHE PATENTSCHRIFT

(11) **EP 2 969 712 B1**
(45) Veröffentlichungstag und Bekanntmachung des Hinweises auf die Patenterteilung: **12.12.2018**
(21) Anmeldenummer: 14709298.5
(22) Anmeldetag: 11.03.2014
(51) Int. Cl.: B62D 27/02, B62D 33/04, F16B 7/02, F16B 7/04

(54) **PROFILRAHMEN, INSBESONDERE FÜR SONDERFAHRZEUGE**
PROFILE FRAME, IN PARTICULAR FOR SPECIAL-PURPOSE VEHICLES
CHÂSSIS EN PROFILÉS, NOTAMMENT POUR VÉHICULES SPÉCIAUX

(30) Priorität: 12.03.2013 DE 102013102488
(43) Veröffentlichungstag der Anmeldung: 20.01.2016
(73) Patentinhaber: Albert Ziegler GmbH, 89537 Giengen an der Brenz (DE)
(72) Erfinder: SCHORN, Rudi, 89531 Giengen an der Brenz (DE); MILARDOVIC, Ivan, 89531 Giengen an der Brenz (DE); HAAG, Robert, 89531 Giengen an der Brenz (DE)
(74) Vertreter: Patronus IP Patent- und Rechtsanwälte
(86) Internationale Anmeldenummer: PCT/EP2014/054731
(87) Internationale Veröffentlichungsnummer: WO 2014/140031

(56) Entgegenhaltungen:
- EP-A1- 1 686 270
- EP-A1- 2 048 380
- CH-A- 244 670
- FR-A- 1 276 390
- FR-A1- 2 261 438
- US-A- 3 574 367

## Beschreibung

Die vorliegende Erfindung betrifft einen Profilrahmen, insbesondere für Sonderfahrzeuge, gemäß dem Oberbegriff des Anspruchs 1, einen Eckverbinder für einen Profilrahmen gemäß dem Oberbegriff des Anspruchs 9, einen Koffer für den Aufbau eines Sonderfahrzeugs gemäß Anspruch 11 sowie ein Verfahren zum Herstellen einer Verbindung zwischen einem ersten Profilbauteil und einem zweiten Profilbauteil mittels eines Eckverbinders gemäß Anspruch 12.

Unter einem Profilrahmen ist ein Rahmen aus Profilbauteilen zu verstehen, der bei der Herstellung von Aufbauten von Fahrzeugen, insbesondere von Sonderfahrzeugen, das Grundgerüst bildet. Die Erfindung wird nachfolgend insbesondere am Beispiel eines Feuerwehrfahrzeugs erläutert. Die Erfindung kann jedoch auch bei anderen Fahrzeugen Anwendung finden. Beispielhaft sind hier Fahrzeuge des THW, des Rettungsdienstes, des Bauhofs, des Katastrophenschutzes allgemein sowie generell Fahrzeuge mit Aufbauten, in denen Gerätschaften, insbesondere technische Gerätschaften, verstaut werden müssen, zu nennen.

Ein Beispiel für einen Profilrahmen ist aus der EP 0791528 A2 bekannt. Dort wird ein Kastenaufbau für ein Nutzfahrzeug beschrieben, bei dem zwei Seitenteile jeweils nach Art eines bandartig umlaufenden Rahmens gebildet werden. Die Seitenteile bilden dabei das Grundgerüst für sogenannte Koffer, die die Geräteräume des Nutzfahrzeugs, insbesondere eines Feuerwehrfahrzeugs enthalten. In diesen Geräteräumen können Gerätschaften wie Feuerlöscher, Schneidgerät, Spreizer, Schlauchmaterial, Wassersauger, Hebekissen sowie weitere für den Feuerwehreinsatz nützliche Gegenstände verstaut werden. Diese Gerätschaften stehen dann den Einsatzkräften während des Einsatzes zur Verfügung.

Der bandartig umlaufende Rahmen der EP 0791528 A2 wird aus plattenantigen Strangprofilelementen eines einheitlichen Hohlkammerstrangprofils zusammengesetzt, die hierzu miteinander verbunden werden. Zur Verbindung der Strangprofilelemente untereinander sind Steckverbinder vorgesehen, die in Längskanäle der Strangprofilelemente eingreifen und mittels einer Schraubverbindung an jeweils zwei Strangprofilelementen befestigt werden.

Diese Ausgestaltung des Aufbaus von Sonderfahrzeugen hat sich in der Praxis bewährt. Der bandartige Rahmen verleiht dem gesamten Aufbau eine solide Stabilität, was unter anderem zu einer langen Lebensdauer auch bei erhöhten Belastungen führt. Durch die Verbindung von Strangprofilelementen und Steckverbindern mittels Schrauben sind die Geräteräume jedoch nicht leicht zu reinigen, da an den Verbindungsstellen zwischen zwei Strangprofilelementen Schraubenköpfe hervorstehen können. Eine Reinigung ist jedoch in der Praxis nötig, damit die in den Geräteräumen angeordneten Gerätschaften nicht immer mehr verschmutzen, was negative Auswirkungen auf deren Lebensdauer hat.

Die Verwendung von Senkschrauben ist zwar möglich, dennoch besteht auch hier die Möglichkeit, dass sich Schmutz zwischen Senkschraube und Strangprofilelement festlagert. Darüber hinaus muss das Strangprofilelement mit einer ausreichenden Wandstärke ausgestattet sein, wenn Senkschrauben verwendet werden sollen. Dies führt wiederum dazu, dass die Strangprofilelemente zu schwer sind, wodurch der gesamte Aufbau entsprechend schwer wird.

Aus der CH 244 670 A geht ein Eckverbinder hervor, der ein teleskopartiges Ausziehen von Profilbauteilen erlaubt. Der Eckverbinder ist aus einem rechtwinkligen, hohlen Grundkörper ausgebildet, der zwei Schenkel besitzt, in welchen jeweils eine Hülse angeordnet ist. Die Hülsen sind an den Schenkeln mittels Schrauben befestigt. In den Hülsen befindet sich eine federbeaufschlagte Spreizeinrichtung, mit welcher ein Profilrahmen 1, 1a am Eckverbinder fixierbar ist.

Es ist daher Aufgabe der Erfindung, die Reinigung von Geräteräumen von Sonderfahrzeugen zu vereinfachen.

Eine weitere Aufgabe der Erfindung ist es, das Gesamtgewicht von gattungsgemäßen Profilrahmen und von Aufbauten für Sonderfahrzeuge zu verringern.

Eine weitere Aufgabe der Erfindung ist es, mehr Platz für die Anordnung von Gerätschaften zu schaffen oder die Anordnung weniger zu behindern, als das im Stand der Technik der Fall ist.

Diese Aufgaben werden durch einen Profilrahmen gemäß Anspruch 1, durch einen Eckverbinder gemäß Anspruch 9, durch einen Koffer für den Aufbau eines Sonderfahrzeugs gemäß Anspruch 11 sowie durch ein Verfahren zum Herstellen einer Verbindung zwischen einem ersten Profilbauteil und einem zweiten Profilbauteil mittels eines Eckverbinders gemäß Anspruch 12 gelöst.

Vorteilhafte Weiterbildungen sind Gegenstand der jeweiligen Unteransprüche.

Der erfindungsgemäße Profilrahmen weist mehrere aneinander befestigte Profilbauteile auf, die vorzugsweise nach Art eines bandartig umlaufenden, geschlossenen Rahmens zusammengefügt sind. Zumindest ein erstes Profilbauteil und ein zweites Profilbauteil des erfindungsgemäßen Profilrahmens sind mittels eines Eckverbinders verbunden. Der Eckverbinder weist einen ersten Schenkel mit einer ersten Längsachse und einen zweiten Schenkel mit einer zweiten Längsachse auf, wobei die Schenkel jeweils in eines der Profilbauteile eingeführt sind. Hierbei wird der erste Schenkel in das erste Profilbauteil und der zweite Schenkel in das zweite Profilbauteil eingeführt. Die Längsachsen der Schenkel sind in einem Winkel zueinander angeordnet, der somit festlegt, in welchem Winkel die Profilbauteile zueinander angeordnet sind. Die Profilbauteile sind vorzugsweise als Strangprofilelemente ausgebildet.

Der erfindungsgemäße Profilrahmen zeichnet sich insbesondere dadurch aus, dass der erste Schenkel einen Spreizabschnitt aufweist, der mittels einer Spreizeinrichtung, die im Wesentlichen entlang der ersten Längsachse verläuft, gespreizt ist, wodurch der erste Schenkel mit dem ersten Profilbauteil verbunden ist, und dass der zweite Schenkel mittels einer Verbindungseinrichtung mit dem zweiten Profilbauteil verbunden ist, wobei die Verbindungseinrichtung im Wesentlichen quer zu der zweiten Längsachse angeordnet ist.

Durch die Verwendung einer Spreizeinrichtung kann auf eine klassische Schraubverbindung des ersten Schenkels mit dem ersten Profilbauteil verzichtet werden, was zur Einsparung eines Schraubenkopfes auf der Oberfläche des ersten Profilbauteils führt. Dadurch wird die Reinigung des Oberflächenbereichs des ersten Profilbauteils deutlich vereinfacht. Da zudem keine Versenkung für eine Senkschraube vorgesehen werden muss, kann die Wandstärke des ersten Profilbauteils deutlich verringert werden, was zu einer erheblichen Gewichtsreduzierung des Profilrahmens führt.

Bei vorteilhaften Weiterbildungen der Erfindung ist die Spreizeinrichtung ein- oder mehrteilig ausgebildet. Insbesondere kann die Spreizeinrichtung eine Spreizschraube und/oder einen Spreizkeil umfassen. Die Verbindung des Eckverbinders mit einem Profilbauteil erfolgt dabei folgendermaßen:
Ein Schenkel des Eckverbinders wird in das Profilbauteil eingeführt und anschließend wird der Spreizabschnitt der Spreizeinrichtung aufgespreizt, wodurch Teile des Schenkels an das Profilbauteil gepresst werden und dabei eine kraftschlüssige und gegebenenfalls zusätzlich formschlüssige Verbindung herstellen. Im Falle einer Spreizschraube wird das Aufspreizen des Spreizabschnitts durch Eindrehen dieser Spreizschraube in eine zum Ende hin immer enger werdende Bohrung vollzogen. Da der Durchmesser der Schraube konstant ist, die Bohrung jedoch in ihrem Durchmesser zum Ende hin abnimmt, wird der Bereich am Ende der Bohrung durch das Einschrauben aufgespreizt. Bei einem Spreizkeil wird in dem Schenkel eine Aussparung vorgesehen, die im Querschnitt bevorzugt eine dreieckige oder trapezförmige Gestalt hat. Eine Schraube greift mittels einer Bohrung von ihrem Ende in diese Aussparung ein und ist dort an dem Keil befestigt. Ein Anziehen der Schraube führt nun zu einem Annähern von Schraubenkopf und Spreizkeil, wodurch der Spreizkeil immer mehr in die Aussparung hineingezogen wird, wodurch der Spreizabschnitt wiederum aufgespreizt wird.

Bei einer besonders vorteilhaften Weiterbildung der Erfindung verdeckt das zweite Profilbauteil die Spreizeinrichtung. Unter verdecken wird insbesondere verstanden, dass das zweite Profilbauteil die erste Längsachse kreuzt. Während bereits die Verwendung einer Spreizeinrichtung dafür sorgt, dass die Schraubenköpfe der Verbindungen des Eckverbinders mit den Profilbauteilen nur im Wesentlichen in eine Richtung zeigen, führt die Verdeckung dazu, dass die Schraube der Spreizeinrichtung am fertigen Profilrahmen überhaupt nicht sichtbar ist. Hierdurch wird die Reinigung weiter vereinfacht. Zudem wird der Korrosionsschutz verbessert, da wenig Öffnungen oder Spalte mit der Umwelt in Kontakt sind.

Zur Aufnahme der Eckverbinder weisen die Profilbauteile vorteilhafterweise Hohlkanäle auf, in die die Eckverbinder eingeführt sind, wobei Schenkelseiten des Eckverbinders mit Kanalflächen in Berührung stehen. Die Anordnung von Hohlkanälen erleichtert das Anordnen der Eckverbinder gegenüber den Profilbauteilen, da definierte Öffnungen vorgesehen sind, in die die Eckverbinder eingeführt werden können. Es können mehr Hohlkanäle als Eckverbinder vorgesehen werden, sodass dann Eckverbinder nur in ausgewählten Hohlkanäle, beispielsweise in Abhängigkeit von der späteren Belastung des Profilbauteils, angeordnet werden.

Um eine noch bessere Verbindung zwischen Eckverbinder und Profilbauteil zu ermöglichen, ist bei vorteilhaften Weiterbildungen der Erfindung vorgesehen, dass an zumindest einer Schenkelseite und/oder einer Kanalfläche eine Verrippung vorgesehen ist. Die Orientierung dieser Verrippung ist bevorzugt quer zu der Richtung, in der die Eckverbinder in die Hohlkanäle eingeführt werden.

Bei vorteilhaften Weiterbildungen der Erfindung weisen die Hohlkanäle Erhebungen auf, die vorzugsweise als längliche Rippen vorgesehen sind und die mit den Schenkelseiten in Berührung stehen. Die Erhebungen bilden dabei definierte Bereiche, in denen die Schenkel mit dem Profilbauteil in Verbindung stehen. Ein ganzflächiges Anliegen der Schenkelseiten an den Kanalflächen bedarf einer hohen Genauigkeit, d.h. einer geringen Toleranz in der Herstellung. Dies ist bei dem Festlegen von definierten Berührungsflächen jedoch nicht notwendig. Zudem kann das Profilbauteil an den Stellen, an denen keine Erhebungen und somit keine Berührungsflächen vorgesehen werden, dünner ausgeführt werden, was wiederum zur Einsparung von Material und damit zu einer Senkung der Herstellungskosten führt.

Da die Profilbauteile bevorzugt als Strangprofilelemente hergestellt werden, können die Erhebungen ohne Weiteres integral mit dem Profilbauteil hergestellt werden. Dies führt zu einer einfachen Herstellung und zu einem insgesamt soliden Grundgerüst in Form des erfindungsgemäßen Profilrahmens. Besonders bevorzugt sind alle Profilbauteile im Querschnitt identische Strangprofilelemente.

Bevorzugt sind die Verbindungseinrichtungen so angeordnet, dass sie die Erhebungen durchstoßen. Dies ist vorteilhaft, da die Schenkel an den Erhebungen anliegen und somit beispielsweise auf Unterlegscheiben verzichtet werden kann, die notwendig wären, wenn die Verbindungseinrichtungen an Orten angebracht würden, an denen die Schenkelseite keinen direkten Kontakt mit der Kanalfläche hat. Die Verbindungseinrichtung besteht vorzugsweise aus einer oder mehreren Schrauben, die durch eine Öffnung des Profilbauteils gehend in eine Bohrung eingeschraubt werden.

Der erfindungsgemäße Eckverbinder für einen Profilrahmen weist einen ersten Schenkel mit einer ersten Längsachse und einen zweiten Schenkel mit einer zweiten Längsachse auf, wobei die Längsachsen in einem Winkel zueinander angeordnet sind. Dieser Winkel bestimmt später bei einem Profilrahmen den Winkel, in dem zwei Profilbauteile, die mittels des Eckverbinders verbunden werden, zueinander stehen. Darüber hinaus ist von diesem Winkel abhängig, wie die Endbereiche der Profilbauteile, in denen diese miteinander verbunden werden, zugeschnitten werden müssen. Bevorzugt werden diese Endbereiche auf Gehrung geschnitten, wobei dann in Abhängigkeit von dem Winkel der Längsachsen zueinander die Endbereiche der Profilbauteile entsprechend auf Gehrung geschnitten werden. Der Winkel beträgt vorzugsweise zwischen 60° und 120°, insbesondere 90°.

Der erfindungsgemäße Eckverbinder zeichnet sich insbesondere dadurch aus, dass eine Spreizbohrung für eine Spreizeinrichtung zum Aufspreizen eines Spreizabschnitts des ersten Schenkels und Aufnahmemittel für eine Verbindungseinrichtung vorgesehen sind, wobei die Spreizeinrichtung im Wesentlichen entlang der ersten Längsachse verläuft und wobei die Aufnahmemittel im Wesentlichen quer zu der zweiten Längsachse angeordnet sind. Durch die Spreizeinrichtung kann, wie oben beschrieben, der erste Schenkel bzw. dessen Spreizabschnitt aufgespreizt werden, wodurch beim erfindungsgemäßen Profilrahmen dieser Schenkel mit einem Profilbauteil verbunden werden kann.

Bei bestimmungsgemäßem Gebrauch des erfindungsgemäßen Profilrahmens kann es vorkommen, dass der Profilrahmen arbeitet, sich also im Laufe der Betriebsdauer oder bei Belastung verformt. Dies kann dazu führen, dass die Profilbauteile aneinander reiben, was zu erhöhtem Verschleiß führt. Daher liegen zwei miteinander verbundene Profilbauteile bei dem erfindungsgemäßen Profilrahmen bevorzugt nicht aneinander an. Dies kann beispielsweise dadurch erreicht werden, dass der erfindungsgemäße Eckverbinder in Bereichen, in denen die zwei zu verbindenden Profilbauteile den geringsten Abstand zueinander aufweisen, mit einer Rundung versehen ist, sodass die Profilbauteile bei der Montage an dem Eckverbinder, nicht aber aneinander anstoßen. Alternativ oder zusätzlich ist es möglich, den Eckverbinder bei der Verbindung mit zumindest einem Profilbauteil nicht auf Anschlag, sondern nur ein stückweit einzubringen.

Spalte, die durch das beabstandete Anordnen der zwei Profilbauteile zueinander entstehen, werden erfindungsgemäß durch eine Dichtung, insbesondere eine elastische Dichtung, verschlossen. Dadurch wird verhindert, dass Schmutz in die Spalte eindringen kann. Eine elastische Dichtung kann Verformungen der Profilbauteile folgen und stellt somit über einen langem Zeitraum die Dichtungsfunktion sicher.

Durch die Anordnung der Spreizbohrung im Wesentlichen entlang der ersten Längsachse und der Anordnung der Aufnahmemittel, die insbesondere eine oder mehrere Bohrungen umfassen, im Wesentlichen quer zu der zweiten Längsachse, wird ermöglicht, dass zur Fixierung des Eckverbinders an zwei Profilbauteilen lediglich der Zugang von einer Seite erfolgt oder erfolgen muss. Dies vereinfacht zum Einen den Zusammenbau oder das Verbinden des Eckverbinders mit den zwei Profilbauteilen und hat am späteren Profilrahmen zudem den Vorteil, dass Schraubenköpfe nur auf einer Seite bzw. an einem Profilbauteil vorhanden sind, was die Reinigung des Profilrahmens insgesamt deutlich vereinfacht.

Besonders bevorzugt weist die Spreizeinrichtung wie oben beschrieben einen Spreizkeil oder eine Spreizschraube auf, wobei der Spreizkeil mittels einer Schraube seine Spreizwirkung entfaltet. Eine besonders vorteilhafte Ausgestaltung des erfindungsgemäßen Eckverbinders sieht zudem vor, dass im Bereich der Spreizbohrung eine Aufnahme für den Senkkopf einer Senkschraube vorgesehen ist. Diese Senkschraube, die insbesondere die Spreizschraube oder die Schraube, die zu einem Spreizkeil gehört, ist, verschwindet dann beim Spreizvorgang in dem Eckverbinder und kann bevorzugt anschließend durch ein zweites an dem Eckverbinder befestigtes Profilbauteil verdeckt werden. Dadurch ist diese Senkschraube am späteren Profilrahmen überhaupt nicht sichtbar.

Erfindungsgemäß weist ein Koffer für den Aufbau eines Sonderfahrzeugs, insbesondere eines Feuerwehrfahrzeugs, einen erfindungsgemäßen Profilrahmen auf. In der Regel weist der Aufbau eines solchen Fahrzeugs zwei Koffer auf, einen für die Geräteräume der Fahrerseite und einen für die Geräteräume der Beifahrerseite. Vorteilhafterweise weisen dabei beide Koffer jeweils einen Profilrahmen gemäß der Erfindung auf.

Unter einem Sonderfahrzeug wird erfindungsgemäß ein Fahrzeug mit einer Antriebseinrichtung, insbesondere einem Motor, mit Antriebsmitteln, insbesondere Reifen, Ketten oder Schrauben, einem Mannschaftsraum sowie einem Aufbau, in dem Gerätschaften untergebracht werden können, verstanden, welches für besondere Einsatzzwecke wie Katastrophenschutz, Rettungswesen, Gefahrenabwehr, Feuerwehr oder Technisches Hilfswerk zum Einsatz kommt. Der Aufbau eines solches Sonderfahrzeugs weist erfindungsgemäß einen Profilrahmen gemäß der Erfindung auf.

Besonders bevorzugte Ausführungsformen dieser Sonderfahrzeuge sind im Rahmen der Erfindung Löschgruppenfahrzeuge, Tanklöschfahrzeuge, Rüstwagen, Gerätewagen, Tragkraftspritzenfahrzeuge, Kleinlöschfahrzeuge, Mittlere Löschfahrzeuge, Hubrettungsfahrzeuge, Schlauchwagen, Einsatzleitwagen sowie weitere Löschfahrzeuge.

Auch Abrollbehälter oder Wechselaufbauten für Wechselladerfahrzeuge können einen erfindungsgemäßen Profilrahmen aufweisen.

Bei dem erfindungsgemäßen Verfahren zum Herstellen einer Verbindung zwischen einem ersten Profilbauteil und einem zweiten Profilbauteil mittels eines Eckverbinders wird zunächst ein erster Schenkel des Eckverbinders in das erste Profilbauteil eingeführt und mittels einer Spreizeinrichtung, die im Wesentlichen entlang einer ersten Längsachse des ersten Schenkels verläuft, mit dem ersten Profilbauteil verbunden. Anschließend wird ein zweiter Schenkel des Eckverbinders in das zweite Profilbauteil eingeführt und mittels einer Verbindungseinrichtung, die im Wesentlichen quer zu einer zweiten Längsachse des zweiten Schenkels verläuft, mit dem zweiten Profilbauteil verbunden. Auf diese Weise ist eine besonders einfache Montage der zwei Profilbauteile möglich. Da die zwei Längsachsen bevorzugt quer, insbesondere senkrecht zueinander angeordnet sind, können alle Verbindungsschritte aus einer Richtung ausgeführt werden, was insbesondere für die Herstellung eines bandartig umlaufenden, geschlossenen Profilrahmens von Vorteil ist.

Bei einer vorteilhaften Weiterbildung des erfindungsgemäßen Verfahrens verdeckt das zweite Profilbauteil die Spreizeinrichtung nach dem Verbinden, wird also bei dem eigenen Verbindungsschritt über die sichtbare Spreizeinrichtung geschoben oder gelegt oder allgemein dort angeordnet. Auf diese Weise ist die Spreizeinrichtung nach dem Verbinden nicht sichtbar und es verbleibt nur die sichtbare Verbindungseinrichtung der Verbindung zwischen erstem Profilbauteil und zweitem Profilbauteil.

Wie bereits oben beschrieben wird erfindungsgemäß durch die Spreizeinrichtung ein Spreizabschnitt des Eckverbinders gespreizt, wodurch der Eckverbinder mit dem ersten Profilbauteil verbunden wird. An dieser Stelle wird darauf hingewiesen, dass die vorteilhaften Weiterbildungen des Profilrahmens und des Eckverbinders an sich auch entsprechend für das erfindungsgemäße Verfahren als vorteilhaft angesehen werden. Das gleiche gilt entsprechend auch umgekehrt sowie zwischen Eckverbinder und Profilrahmen an sich.

Bei einer zusätzlich vorteilhaften Weiterbildung der Erfindung weist der Spreizabschnitt eine Sollbruchstelle auf, die während des erfindungsgemäßen Verfahrens bei der Verbindung von erstem Schenkel und erstem Profilbauteil, ausgelöst durch die Spreizeinrichtung bzw. deren Betätigung, bricht.

Bevorzugt bestehen die Profilbauteile und/oder die Eckverbinder aus Aluminium oder Leichtmetall. Diese Materialien bieten eine ausreichende Stabilität bei relativ geringem Gewicht.

Die Erfindung wird nachfolgend anhand von sechs Zeichnungen dargestellt und beispielhaft erläutert. Es zeigen dabei:
- Figur 1:: einen erfindungsgemäßen Profilrahmen;
- Figur 2:: das Detail A der Figur 1 in einer Schnittdarstellung;
- Figur 3:: eine Ausführungsform eines in einem ersten Profilbauteil angeordneten erfindungsgemäßen Eckverbinders in einer Schnittdarstellung;
- Figur 4:: die Anordnung des Eckverbinders gemäß Figur 3 in einem zweiten Profilbauteil in einer Schnittdarstellung;
- Figur 5:: eine weitere Ausführungsform eines erfindungsgemäßen Eckverbinders in einer Schnittdarstellung und
- Figur 6:: eine Ausführungsform eines erfindungsgemäßen Eckverbinders in einer Schnittdarstellung.

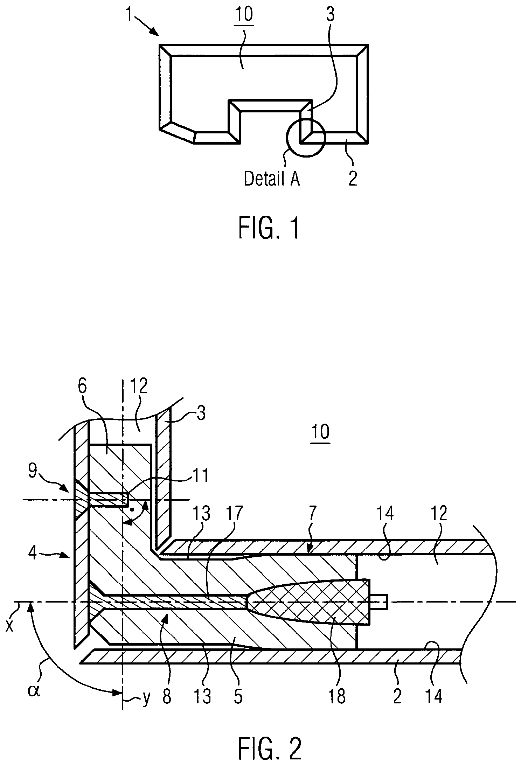

Der in Figur 1 dargestellte erfindungsgemäße Profilrahmen 1 besteht aus insgesamt neun Profilbauteilen, die als Strangprofilelemente ausgebildet sind und bandartig umlaufend den Profilrahmen 1 bilden. Der dargestellte Profilrahmen 1 bildet das Grundgerüst für den Koffer eines Aufbaus eines Feuerwehrfahrzeugs. Während die meisten Profilbauteile mit dem jeweils benachbarten über einen 90° Winkel verbunden sind, gibt es im linken Bereich des Profilrahmens 1 eine Verbindung mit einem Winkel von 30° und eine Verbindung mit einem Winkel von 60°, was der Geländegängigkeit des späteren Fahrzeugs zuträglich ist.

Der Profilrahmen 1 bildet einen Innenbereich 10, in dem später Gerätschaften in Geräteräumen angeordnet werden können. Durch die Erfindung werden die Möglichkeiten, diesen Innenbereich 10 zu bestücken, vergrößert und gleichzeitig wird es einfacher, die Profilbauteile ausgehend von dem Innenbereich 10 zu säubern.

Das Detail A betrifft die Verbindung aus einem ersten Profilbauteil 2 und einem zweiten Profilbauteil 3. Diese Verbindung ist in Figur 2 näher dargestellt. Das waagrecht angeordnete erste Profilbauteil 2 ist dabei mittels eines Eckverbinders 4 mit dem vertikal angeordneten zweiten Profilbauteil 3 verbunden. Der Eckverbinder 4 weist einen ersten Schenkel 5 mit einer ersten Längsachse x und einen zweiten Schenkel 6 mit einer zweiten Längsachse y auf. Der erste Schenkel 5 ist in das erste Profilbauteil 2 und der zweite Schenkel 6 in das zweite Profilbauteil 3 eingeführt. Die beiden Schenkel 5, 6 wurden dabei in Hohlkanäle 12 der Profilbauteile 2, 3 eingeführt.

Der erste Schenkel 5 weist an seinem freien Ende einen Spreizabschnitt 7 auf, der mittels eines Spreizkeils 18 aufgespreizt wurde, wodurch sich die Schenkelseiten 13 des ersten Schenkels 5 in dem Spreizabschnitt 7 an die Kanalfläche 14 des Hohlkanals 12 des ersten Profilbauteils 2 anlegen und dort angepresst werden. Dadurch ist der Eckverbinder 4 fest mit dem ersten Profilbauteil 2 verbunden. Der Spreizkeil 18 wurde zur Verbindung mittels einer Senkschraube 17 in den ersten Schenkel 5 hineingezogen, wodurch die Spreizung bewirkt wurde. Die den Spreizkeil 18 und die Senkschraube 17 umfassende Spreizeinrichtung 8 ist im Wesentlichen entlang der ersten Längsachse x angeordnet.

Der zweite Schenkel 6 ist mittels einer Verbindungseinrichtung 9, hier eine weitere Senkschraube, mit dem zweiten Profilbauteil 3 verbunden, wobei die Verbindungseinrichtung 9 sowie die dazugehörigen Aufnahmemittel 11 in dem ersten Schenkel 6 im Wesentlichen quer zu der zweiten Längsachse y angeordnet sind. Die erste Längsachse x und die zweite Längsachse y sind in einem Winkel α zueinander angeordnet, wobei dieser bei der vorliegenden Ausführungsform 90° beträgt.

Wie unter Berücksichtigung der Figur 1 klar wird, sind bei der Verbindung des ersten Profilbauteils 2 und des zweiten Profilbauteils 3 nur Schrauben von einer Seite sichtbar, wobei diese am späteren Fahrzeug vom Radkasten aus sichtbar sind, wo sie nicht stören. Der Innenbereich 10 weist keine Schraube auf, wodurch dieser sehr einfach zu reinigen ist. Es sei darauf hingewiesen, dass die Berührungs- oder Nahezu-Berührungsbereiche zwischen erstem Profilbauteil 2 und zweitem Profilbauteil 3 mit einer Dichtung versehen werden können, sodass Schmutz nicht zu dem Eckverbinder 4 gelangt.

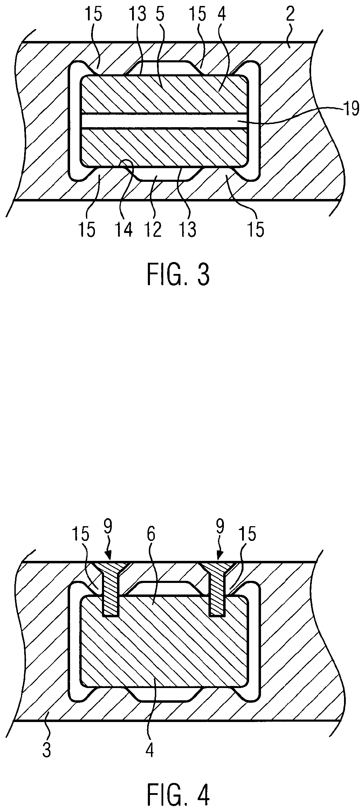

Die Figur 3 verdeutlicht die Anordnung des Eckverbinders 4 in einem Hohlkanal 12 des ersten Profilbauteils 2 gemäß einer weiteren Ausführungsform. Die Figur 3 ist dabei eine Schnittdarstellung entlang der ersten Längsachse x und zeigt dabei den ersten Schenkel 5. Der erste Schenkel 5 weist dabei eine Spreizbohrung 19 auf, die sich über die gesamte Breite des ersten Schenkels 5 erstreckt. In diese Spreizbohrung 19 wird später zur Verbindung des ersten Schenkels 5 mit dem ersten Profilbauteil 2 ein Spreizkeil eingebracht, wodurch der Endbereich des ersten Schenkels 5 gespreizt wird. Dadurch werden Schenkelseiten 13 des ersten Schenkels 5 gegen Erhebungen 15 und die Kanalfläche 14 des Hohlkanals 12 gedrückt, wodurch eine feste Verbindung zwischen erstem Schenkel 5 und erstem Profilbauteil 2 entsteht. Die Erhebungen 15 bilden dabei definierte Anlageflächen für den ersten Schenkel 5 aus und können, da das erste Profilbauteil 2 ein Strangprofilelement ist, integral mit diesem hergestellt werden.

Die Figur 4 zeigt die Verbindung des Eckverbinders 4 gemäß Figur 3 mit dem zweiten Profilbauteil 3, welches ebenso wie das erste Profilbauteil 2 ein Strangprofilelement mit dem gleichen Profil ist. Der zweite Schenkel 6 des Eckverbinders 4 ist mittels zweier Verbindungseinrichtungen 9 in Form von Senkschrauben mit dem zweiten Profilbauteil 3 verbunden. Die Verbindungseinrichtungen 9 sind dabei im Bereich der Erhebungen 15 angeordnet, da der zweite Schenkel 6 an den Erhebungen 15 anliegt, was für die Verbindung von Vorteil ist.

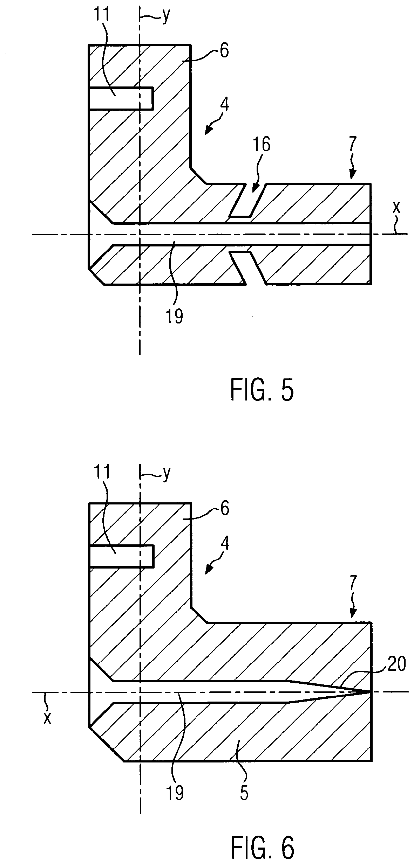

Die in Figur 5 dargestellte Ausführungsform eines erfindungsgemäßen Eckverbinders 4 weist eine Sollbruchstelle 16 an dem ersten Schenkel 5 auf. Da der Eckverbinder 4 vorteilhafterweise ebenfalls als Strangprofilelement ausgebildet ist, kann die Sollbruchstelle integral hergestellt werden. Der Eckverbinder 4 weist eine Spreizbohrung 19 entlang der ersten Längsachse x des ersten Schenkels 5 auf, in der bei bestimmungsgemäßem Gebrauch eine Spreizeinrichtung mit Spreizteil angeordnet wird. Beim Betätigen der Spreizeinrichtung 8 wird die Sollbruchstelle 16 gebrochen, wodurch der Endabschnitt 22 des ersten Schenkels 5 schlagartig in Richtung des restlichen Eckverbinders 4 gezogen wird.

Der Eckverbinder 4 weist weiter ein Aufnahmemittel 11 in Form einer Sackbohrung auf, in der bei bestimmungsgemäßem Gebrauch eine Verbindungseinrichtung 9 angeordnet werden kann, wodurch der zweite Schenkel 6 des Eckverbinders 4 mit einem zweiten Profilbauteil 3 verbunden werden kann.

In Figur 6 ist eine weitere Ausführungsform des erfindungsgemäßen Eckverbinders 4 dargestellt, bei der die Spreizbohrung 19 einen sich verjüngenden Bohrungsabschnitt 20 aufweist, der im Bereich des freien Endes des ersten Schenkels 5 angeordnet ist. Bei bestimmungsgemäßem Gebrauch wird eine Spreizschraube, die eine herkömmliche Senkschraube sein kann, in die Spreizbohrung 19 eingedreht. Durch den verjüngten Bohrungsabschnitt 20 wird der erste Schenkel 5 im Bereich des freien Endes, dem Spreizabschnitt 7, aufgespreizt.

### Bezuaszeichenliste

- 1: Profilrahmen
- 2: Erstes Profilbauteil
- 3: Zweites Profilbauteil
- 4: Eckverbinder
- 5: Erster Schenkel
- 6: Zweiter Schenkel
- 7: Spreizabschnitt
- 8: Spreizeinrichtung
- 9: Verbindungseinrichtung
- 10: Innenbereich
- 11: Aufnahmemittel
- 12: Hohlkanal
- 13: Schenkelseite
- 14: Kanalfläche
- 15: Erhebung
- 16: Sollbruchstelle
- 17: Senkschraube
- 18: Spreizkeil
- 19: Spreizbohrung
- 20: Bohrungsabschnitt
- 22: Endabschnitt

- α: Winkel
- x: erste Längsachse
- y: zweite Längsachse

## Patentansprüche

1. Profilrahmen, insbesondere für Sonderfahrzeuge, mit mehreren aneinander befestigten Profilbauteilen, wobei zumindest ein erstes Profilbauteil (2) und ein zweites Profilbauteil (3) mittels eines Eckverbinders (4) verbunden sind, wobei der Eckverbinder (4) einen ersten Schenkel (5) mit einer ersten Längsachse (x) und einen zweiten Schenkel (6) mit einer zweiten Längsachse (y) aufweist, die jeweils in eines der Profilbauteile (2,3) eingeführt sind, wobei die Längsachsen (x,y) in einem Winkel (α) zueinander angeordnet sind, wobei der erste Schenkel (5) einen Spreizabschnitt (7) aufweist, der mittels einer Spreizeinrichtung (8), die im Wesentlichen entlang der ersten Längsachse (x) verläuft, gespreizt ist, wodurch der erste Schenkel (5) mit dem ersten Profilbauteil (2) verbunden ist, und dass der zweite Schenkel (6) mittels einer Verbindungseinrichtung (9) mit dem zweiten Profilbauteil (3) verbunden ist,
**dadurch gekennzeichnet, dass**
die Verbindungseinrichtung (9) im Wesentlichen quer zu der zweiten Längsachse (y) angeordnet ist.

2. Profilrahmen gemäß Anspruch 1,
**dadurch gekennzeichnet, dass**
die Spreizeinrichtung (8) ein- oder mehrteilig ausgebildet ist.

3. Profilrahmen gemäß Anspruch 1 oder 2,
**dadurch gekennzeichnet, dass**
die Spreizeinrichtung (8) eine Spreizschraube und/oder einen Spreizkeil (18) umfasst.

4. Profilrahmen gemäß einem der vorhergehenden Ansprüche,
**dadurch gekennzeichnet, dass**
das zweite Profilbauteil (3) die Spreizeinrichtung (8) verdeckt.

5. Profilrahmen gemäß einem der vorhergehenden Ansprüche,
**dadurch gekennzeichnet, dass**
die Profilbauteile (2,3) Hohlkanäle (12) aufweisen, in die Eckverbinder (4) eingeführt sind, wobei Schenkelseiten (13) des Eckverbinders (4) mit Kanalflächen (14) in Berührung stehen.

6. Profilrahmen gemäß Anspruch 5,
**dadurch gekennzeichnet, dass**
an zumindest einer Schenkelseite (13) und/oder einer Kanalfläche (14) eine Verrippung vorgesehen ist.

7. Profilrahmen gemäß Anspruch 5 oder 6,
**dadurch gekennzeichnet, dass**
die Hohlkanäle (12) Erhebungen (15) aufweisen, die mit den Schenkelseiten (13) in Berührung stehen.

8. Profilrahmen gemäß Anspruch 7,
**dadurch gekennzeichnet, dass**
die Verbindungseinrichtungen (9) so angeordnet werden, dass sie die Erhebungen (15) durchstoßen.

9. Eckverbinder für einen Profilrahmen mit einem ersten Schenkel (5) mit einer ersten Längsachse (x) und einem zweiten Schenkel (6) mit einer zweiten Längsachse (y), wobei die Längsachsen (x,y) in einem Winkel (alpha) zueinander angeordnet sind, wobei eine Spreizbohrung (19) für eine Spreizeinrichtung (8) zum Aufspreizen eines Spreizabschnitts (7) des ersten Schenkels (5) und Aufnahmemittel (11) für eine Verbindungseinrichtung (9) zum Verbinden des zweiten Schenkels (6) mit einem Profilbauteil (3) vorgesehen sind, wobei die Spreizbohrung (8) im Wesentlichen entlang der ersten Längsachse (x) verläuft und
**dadurch gekennzeichnet,**
**dass** die Aufnahmemittel (11) im Wesentlichen quer zu der zweiten Längsachse (y) angeordnet sind.

10. Eckverbinder gemäß Anspruch 9,
**dadurch gekennzeichnet, dass**
der Spreizabschnitt (7) eine Sollbruchstelle (16) aufweist, die durch die Spreizeinrichtung (8) gebrochen werden kann.

11. Koffer für den Aufbau eines Sonderfahrzeugs, insbesondere eines Feuerwehrfahrzeugs, aufweisend einen Profilrahmen gemäß einem der Ansprüche 1 bis 8.

12. Verfahren zum Herstellen einer Verbindung zwischen einem ersten Profilbauteil (2) und einem zweiten Profilbauteil (3) mittels eines Eckverbinders (4), wobei
a) zunächst ein erster Schenkel (5) des Eckverbinders (4) in das erste Profilbauteil (2) eingeführt und mittels einer Spreizeinrichtung (8), die im Wesentlichen entlang einer ersten Längsachse (x) des ersten Schenkels (5) verläuft, mit dem ersten Profilbauteil (2) verbunden wird, wobei
b) anschließend ein zweiter Schenkel (6) des Eckverbinders (4) in das zweite Profilbauteil (3) eingeführt und mittels einer Verbindungseinrichtung (9), die im Wesentlichen quer zu einer zweiten Längsachse (y) des zweiten Schenkels (6) verläuft, mit dem zweiten Profilbauteil (3) verbunden wird.

13. Verfahren zum Herstellen einer Verbindung zwischen einem ersten Profilbauteil (2) und einem zweiten Profilbauteil (3) gemäß Anspruch 12,
**dadurch gekennzeichnet, dass**
das zweite Profilbauteil (3) die Spreizeinrichtung (8) nach dem Verbinden verdeckt.

14. Verfahren zum Herstellen einer Verbindung zwischen einem ersten Profilbauteil (2) und einem zweiten Profilbauteil (3) gemäß Anspruch 12 oder 13,
**dadurch gekennzeichnet, dass**
durch die Spreizeinrichtung (8) ein Spreizabschnitt (7) des Eckverbinders (4) gespreizt wird, wodurch der Eckverbinder (4) mit dem ersten Profilbauteil (2) verbunden wird.

15. zum Herstellen einer Verbindung zwischen einem ersten Profilbauteil (2) und einem zweiten Profilbauteil (3) gemäß einem der Ansprüche 12 bis 14,
**dadurch gekennzeichnet, dass**
der Spreizabschnitt (7) eine Sollbruchstelle (16) aufweist, die während des Verbindens vom ersten Schenkel (5) und ersten Profilbauteil (2), ausgelöst durch die Spreizeinrichtung (8), bricht.

## Claims

1. Profile frame, in particular for special vehicles, with a plurality of profiled components fastened to each other, wherein at least a first profile component (2) and a second profile component (3) are connected by means of a corner connector (4), wherein the corner connector (4) has a first leg (5) having a first longitudinal axis (x) and a second leg (6) having a second longitudinal axis (y), which are respectively inserted into one of the profile components (2, 3), wherein the longitudinal axes (x, y) are arranged at an angle (α) to each other,
**characterized in that**
the first leg (5) has a spreading portion (7) which is spread by means of a spreading device (8) which extends substantially along the first longitudinal axis (x), whereby the first leg (5) is connected to the first profile component (2), and that the second leg (6) by means of a connecting device (9) with the second profile component (3) is connected, wherein the connecting means (9) substantially transversely is arranged to the second longitudinal axis (y).

2. Profile frame according to claim 1,
**characterized in that**
the spreading device (8) is formed in one or more parts.

3. Profile frame according to claim 1 or 2,
**characterized in that**
the spreading device (8) comprises an expansion screw and / or an expansion wedge (18).

4. Profile frame according to one of the preceding claims,
**characterized in that**
the second profile component (3) obscures the spreading device (8).

5. Profile frame according to one of the preceding claims,
**characterized in that**
the profile components (2, 3) have hollow channels (12), wherein the corner connector (4) are inserted, wherein leg sides (13) of the corner connector (4) stand in contact with with channel surfaces (14).

6. Profile frame according to claim 5,
**characterized in that**
on at least a leg side (13) and / or a channel surface (14), a ribbing is provided.

7. Profile frame according to claim 5 or 6, **characterized in that** the hollow channels (12) have elevations (15) which are in contact with the leg sides (13).

8. Profile frame according to claim 7,
**characterized in that**
the connecting means (9) are arranged so that they pierce the elevations (15).

9. Corner connector for a profile frame having a first leg (5) with a first longitudinal axis (x) and a second leg (6) with a second longitudinal axis (y), wherein the longitudinal axes (x, y) are arranged at an angle (α) to each other, wherein a spreader bore (19) for a spreading device (8) for spreading apart a spreading section (7) of the first leg (5), and receiving means (11) for a connecting device (9) for connecting of the second leg (6) with a profile component (3) are provided, wherein the spreader bore (19) extends substantially along the first longitudinal axis (x) and
**characterised in that** that the receiving means (11) are arranged substantially transversely to the second longitudinal axis (y).

10. Corner connector according to claim 9,
**characterized in that**
the spreading portion (7) has a predetermined breaking point (16) which can be broken by the spreading device (8).

11. Case for the construction of a special vehicle, in particular a fire engine, comprising a profile frame according to one of claims 1 to 8.

12. Method for producing a connection between a first profile component (2) and a second profile component (3) by means of a corner connector (4), wherein
a) first a first leg (5) of the corner connector (4) is inserted into the first profile component (2) and is connected to the first profile component (2) by means of a spreading device (8), which extends substantially along a first longitudinal axis (x) of the first leg (5), wherein
b) subsequently a second leg (6) of the corner connector (4) is introduced into the second profile component (3) and connected with the second profile component (3)by means of a connecting device (9) which extends substantially transversely to a second longitudinal axis (y) of the second leg (6).

13. Method for producing a connection between a first profile component (2) and a second profile component (3) according to claim 12,
**characterized in that**
the second profile component (3) obscures the spreading device (8) after connection.

14. A method for producing a connection between a first profile component (2) and a second profile component (3) according to claim 12 or 13,
**characterized in that**
a spreading portion (7) of the corner connector (4) is spread by the spreading device (8), whereby the corner connector (4) is connected with the first profile component (2).

15. A method of producing a connection between a first profile component (2) and a second profile component (3) according to one of claims 12 to 14,
**characterized in that**
the expansion portion (7) has a predetermined breaking point (16), which, during the connection of the first leg (5) and the first profile component (2), triggered by the spreading device (8), breaks.

## Revendications

1. Cadre de profilé, notamment pour véhicules spéciaux, avec une pluralité de composants profilés, dans lequel au moins un premier composant de profilé (2) et un second composant de profilé (3) sont raccordés au moyen d'un connecteur d'angle (4), dans lequel le connecteur d'angle (4) comprend une première jambe (5) avec un premier axe longitudinal (x) et une seconde jambe (6) avec un second axe longitudinal (y), qui sont respectivement insérés dans l'un des composants profilés (2, 3), les axes longitudinaux (x, y) étant agencés formant un angle (a) l'un par rapport à l'autre, dans lequel la première jambe (5) comporte une partie d'écartement (7) qui est écartée au moyen d'un dispositif d'écartement (8) qui s'étend sensiblement le long du premier axe longitudinal (x), par quoi la première jambe (5) est connectée au premier composant de profilé (2), et la seconde jambe (6) est connectée au moyen d'un dispositif de connexion (9) avec le second élément profilé (3),
**caractérisé par** ce que
le dispositif de connexion (9) et disposé sensiblement transversal au second axe longitudinal (y).

2. Cadre de profilé selon la revendication 1,
**caractérisé en ce que**
le dispositif d'écartement (8) est formé en une ou plusieurs parties.

3. Cadre de profilé selon la revendication 1 ou 2,
**caractérisé en ce que**
le dispositif d'écartement (8) comprend une vis d'expansion et / ou une cale d'expansion (18).

4. Cadre de profilé selon l'une des revendications précédentes,
**caractérisé en ce que** le second composant de profilé (3) cache le dispositif d'écartement (8).

5. Cadre de profilé selon l'une des revendications précédentes,
**caractérisé en ce que**
les composants profilés (2, 3) comprennent des conduits creux (12), dans lesquels les connecteurs d'angle (4) sont insérés, les côtés (13) des jambes du connecteur d'angle (4) étant en contact avec des surfaces de conduit (14).

6. Cadre de profilé selon la revendication 5,
**caractérisé en ce que**
sur au moins un côté de jambe (13) et / ou une surface de conduit (14), une nervure est prévue.

7. Cadre de profilé selon la revendication 5 ou 6,
**caractérisé en ce que**
les conduits creux (12) présentent des surélévations (15) qui sont en contact avec les côtés des jambes (13).

8. Cadre de profilé selon la revendication 7,
**caractérisé en ce que**
les moyens de connexion (9) sont disposés de manière à percer les élévations (15).

9. Connecteur d'angle pour un cadre comportant une première jambe (5) avec un premier axe longitudinal (x) et une seconde jambe (6) avec un second axe longitudinal (y), dans lequel les axes longitudinaux (x, y) sont disposés formant un angle (α) l'un par rapport à l'autre,
dans lequel un alésage d'écartement (19) pour un dispositif d'écartement (8) pour l'écartement d'une section d'écartement (7) de la première jambe (5) et des moyens de réception (11) pour un dispositif de connexion (9) pour la connexion de la deuxième jambe (6) avec un composant de profilé (3) sont disposés, dans lequel l'alésage d'écartement (19) s'étend sensiblement le long du premier axe longitudinal (x) et
**caractérisé en ce que**
les moyens de réception (11) sont disposés sensiblement transversalement au deuxième axe longitudinal (y).

10. Connecteur d'angle selon la revendication 9,
**caractérisé en ce que** la partie d'écartement (7) a un point de rupture (16) prédéterminé qui peut être cassé par le dispositif d'écartement (8).

11. Coffre pour la construction d'un véhicule spécial, en particulier d'une voiture de pompiers, comprenant un châssis profilé selon l'une des revendications 1 à 8.

12. Procédé pour réaliser une connexion entre un premier composant de profilé (2) et un deuxième composant de profilé (3) au moyen d'un connecteur d'angle (4), dans lequel
a) une première jambe (5) du connecteur d'angle (4) est connectée au moyen d'un dispositif d'écartement (8) qui s'étend sensiblement le long d'un premier axe longitudinal (x) de la première jambe (5) au premier composant de profilé (2), dans lequel
b) ensuite une seconde jambe (6) du connecteur d'angle (4) est inséré dans le second composant de profilé (3) et relié au moyen d'un dispositif de connexion (9) qui s'étend sensiblement transversalement à un second axe longitudinal (y) de la seconde jambe (6) avec le deuxième élément de profilé (3).

13. Procédé de réalisation d'une connexion entre un premier profilé (2) et un second profilé (3) selon la revendication 12,
**caractérisé en ce que**
le second profilé (3) masque le dispositif d'écartement (8) après la connexion.

14. Procédé de réalisation d'une connexion entre un premier profilé (2) et un second profilé (3) selon la revendication 12 ou 13,
**caractérisé en ce que**
par les moyens du dispositif d'écartement une partie d'écartement (7) du connecteur d'angle (4) est écartée, par quoi par le connecteur d'angle (4) est connectée avec avec le premier composant de profilé (2).

15. Procédé de réalisation d'une connexion entre un premier composant de profilé (2) et un second composant de profilé (3) selon l'une des revendications 12 à 14,
**caractérisé en ce que**
la partie d'écartement (7) présente un point de rupture prédéterminé (16), qui se brise durant la connexion de la première jambe (5) et du premier composant de profilé (2), déclenché par le dispositif d'écartement (8).
